# EUROPEAN PATENT APPLICATION

(11) **EP 2 418 568 A1**
(43) Date of publication of application: **15.02.2012**
(21) Application number: 09843096.0
(22) Date of filing: 22.07.2009
(51) Int. Cl.: G06F 3/048, H04N 13/00, H04N 5/445

(54) **APPARATUS AND METHOD FOR REPRODUCING STEREOSCOPIC IMAGES, PROVIDING A USER INTERFACE APPROPRIATE FOR A 3D IMAGE SIGNAL**

(30) Priority: 10.04.2009 KR 20090031490; 18.05.2009 US 179340
(71) Applicant: LG Electronics Inc., Seoul 150-721 (KR)
(72) Inventor: HAN, Sang-Choul, Gyeongsangbuk-Do 718-806 (KR); CHOI, Seung-Jong, Seocho-Gu, Seoul 137-779 (KR); KIM, Joon-Young, Seoul 121-130 (KR)
(74) Representative: Frenkel, Matthias Alexander
(86) International application number: PCT/KR2009/004076
(87) International publication number: WO 2010/117109

(57) **Abstract**

The present invention provides a stereoscopic image reproducing apparatus which provides a user interface (UI) appropriate for a 3D image signal, comprising: a user interface generating unit which generates the user interface; a UI-scaling unit which scales the generated UI in accordance with the mode of the 3D image signal; a first storage unit which stores the scaled UI together with a first position value; a second storage unit which copies the UI stored in the first storage unit, and stores the copied UI together with a second position value in accordance with the mode of the 3D image signal; and an integrated storage unit which integrates the UIs stored in the first storage unit and in the second storage unit in accordance with the position value of each of the UIs, and stores the integrated UIs. Preferably, the UI-scaling unit performs a downscaling process for reducing the generated UI in the horizontal direction when the 3D image signal has a side-by-side mode. In addition, the UI-scaling unit preferably performs a downscaling process for reducing the generated UI in the vertical direction when the 3D image signal has a top-down mode. The present invention thereby provides a user interface which causes no distortion in a stereoscopic image display.

## Description

### FIELD OF INVENTION

The present invention relates to an apparatus and method for reproducing three-dimensional images, and in particular, an apparatus and method for displaying a user interface (UI) in the three-dimensional images.

### BACKGROUND

Recently, as the interest in three-dimensional (3D) imaging services is increasing, devices that can provide 3D images are continuously being developed. A stereoscopic approach is one of the methods for implementing 3D images.

The basic principle of the stereoscopic approach is that images, which are arranged to be orthogonal to each other, are entered separately into person's left eye and right eye, and a stereoscopic image is generated by such images is combined in a person's brain. Here, the images being arranged to be orthogonal to each other means that such images do not cause interference to each other.

Some specific methods for eliminating interference include a polarization method, a time-sequential method and a spectral method.

First, the polarization method is a method of separating each image by using a polarization filter. In other words, by applying the polarization filter for images for the left eye and for the right eye to be orthogonal to each other, a different image filtered by the polarizing filter is applied into each line of sight for the left eye and for the right eye.

The time-sequential method is a method of displaying left and right images in turn, and each separate image is synchronized with the images displayed in turn due to the active glasses worn by the user. In other words, when the images are displayed in an alternating manner, the shutter operation of the active glasses alternatingly allows only one image to be seen and the other image to be blocked, such that the left and right images are separated and provided to the user.

In the spectral method, an RGB spectrum projects the left and right images via a spectrum filter that has spectrum bands which do not overlap with each other. The user receives the left and right images separately by wearing passive glasses having a spectral filter which passes only the established spectrum band for each of the left and right images, respectively.

On the other hand, when the left and right images are transmitted to thus obtain stereoscopic images, each image can be transmitted at a rate of over 60 frames per second. That is, when displayed on the screen at a total speed of over 120Hz, 3D images can be achieved without flickering.

At this time, 3D modes which can be applied to 3D image signal include a frame sequential mode, a side-by-side mode, a top-down mode, a checker board mode, and so on.

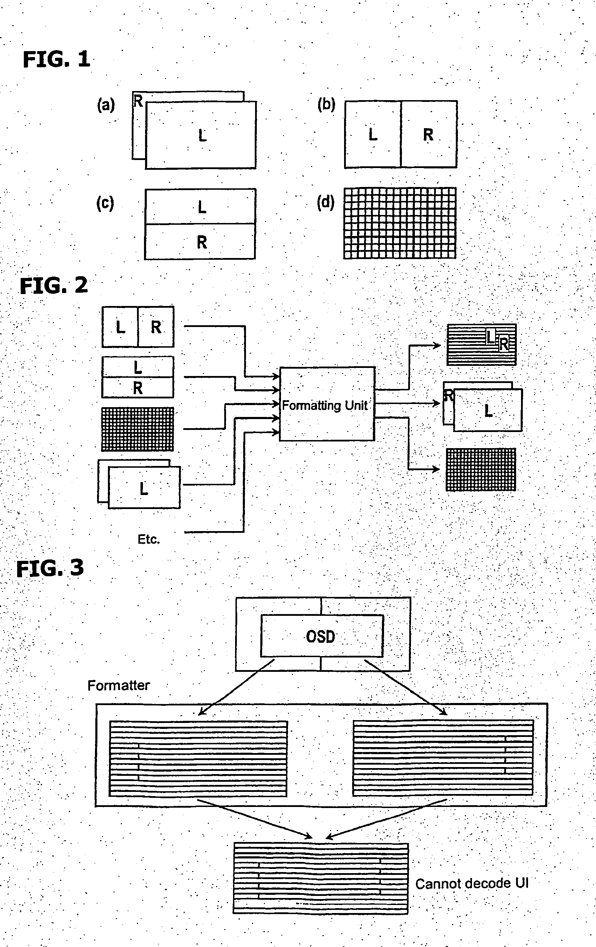

Hereinafter, the 3D modes that can be applied to various 3D image signals will be described in more detail with reference to Figure 1.

First,
Figure 1 (a) is a view showing the frame sequential mode among the 3D modes of 3D image signals. The frame sequential mode is, as shown in Figure 1 (a), a way to alternately position each left image and right image as one frame.
Figure 1 (b) is a view showing the side-by-side mode among the 3D modes of 3D image signals. The side-by-side mode is, as shown in Figure 1 (b), a way of performing 1/2 sub sampling to each of the left and right images in the horizontal direction, and positioning the sampled left image and right image on the left side and right side, respectively.
Figure 1 (c) is a view showing the top-down mode among the 3D modes of 3D image signals. The top-down mode is, as shown in Figure 1 (c), a way of performing 1/2 sub sampling to each of the left and right images in the vertical direction, and positioning the sampled left image and right image on the top side and bottom side, respectively.
Figure 1 (d) is a view showing the checker board mode among the 3D modes of 3D image signals. The checker board mode is, as shown in Figure 1 (d), a way of performing 1/2 sub sampling to each of the left and right images in the vertical and horizontal directions, respectively, and positioning the pixels of the sampled left image and the pixels of the sampled right image in an alternating manner.

A formatter for a stereoscopic images display device performs the operations of receiving image signals which have various modes as described above, formatting such in an appropriate manner for outputting of stereoscopic images display, and transferring such to a display device such as an LCD panel. Figure 2 is a view explaining the operation of such formatter as described above. Figure 2 shows the operation that a conventional formatter that formats 3D image signals which have various modes appropriate for stereoscopic image display output.

On the other hand, in general, a stereoscopic image display device provides a User Interface (UI) which allows users to change stereoscopic image display settings. The user interface is provided so that users can change the environment or settings of the device or to control such operations, and such user interface can be provided by displaying such on the screen.

One example is to provide the user interface on the screen via an On Screen Display (OSD) method. The On Screen Display (OSD) provides screen adjustments so that users can choose or change settings of the screen directly. Here, although there are various settings of a screen which can be adjusted, most settings include brightness, contrast, tuning, RGB, horizontal /vertical size, and location of display.

But, traditional stereoscopic display devices which are implemented as described above, have some problems in the process that displays the User Interface on the screen.

In other words, in traditional stereoscopic display devices, UI data are inserted into 3D image signals before the 3D image signal are provided to the formatting unit explained above. Thus, when the formatting operation is performed for displaying output stereoscopic images in the formatting unit, the UI is also undergoes format conversion with the 3D image signals. During such process, distortion occurs in displaying of the UI, and thus, there are problems that the UI cannot be properly provided.

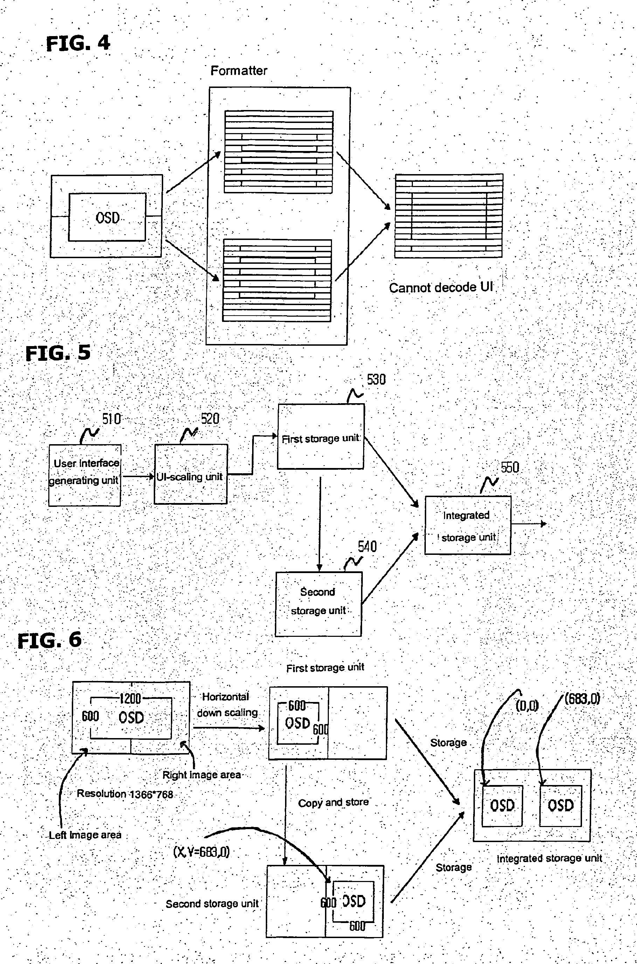

Figure 3 and Figure 4 show that the conventional art problems described as above. Figure 3 is a view showing the distortion phenomena of the traditional UI which is included in the 3D image signal for the side-by-side mode as a result of performing formatting by the formatter. Figure 4 is a view showing the distortion phenomena of the traditional UI which is included in the 3D image signal for the top-down mode as a result of performing formatting by the formatter.

As shown in Figures 3 and 4, the traditional UI display results in distortions due to the formatting operation of the formatter, which results in degraded images that cannot be decoded or viewed properly.

This problem is more noticeable in the side-by-side mode or in the top-down mode.

Therefore, methods to avoid such distortion phenomena of UI displays are required when displaying stereoscopic images, but such techniques are still not being implemented properly. Also, there is a problem that users cannot appropriately use certain user interface display methods, such as OSD.

### SUMMARY

The present invention is for solving the conventional problems such as those described above, whereby the purpose of the present invention is to provide an apparatus and method for stereoscopic images display which provides a user interface (UI) without causing distortions in stereoscopic display.

Another purpose of the present invention is to provide a UI which causes no distortion and without consuming too much additional resources by using certain functions that is supported in the driver-level applications.

Another purpose of the present invention is to provide an apparatus and method for stereoscopic images display which improves the ease of use by providing a UI which causes no distortion in stereoscopic display to allow users to control various display settings.

To achieve these purposes, the present invention provides a stereoscopic image displaying apparatus which provides a user interface (UI) appropriate for a 3D image signal, comprising : a user interface generating unit which generates the user interface; a UI-scaling unit which scales the generated UI in accordance with the mode of the 3D image signal; a first storage unit which stores the scaled UI together with a first position value; a second storage unit which copies the UI stored in the first storage unit, and stores the copied UI together with a second position value in accordance with the mode of the 3D image signal; and an integrated storage unit which integrates the UIs stored in the first storage unit and in the second storage unit in accordance with the position value of each of the UIs, and stores the integrated UIs.

Preferably, the UI-scaling unit performs a downscaling process for reducing the generated UI in the horizontal direction when the 3D image signal has a side-by-side mode. In addition, the UI-scaling unit preferably performs a downscaling process for reducing the generated UI in the vertical direction when the 3D image signal has a top-down mode.

On the other hand, the present invention provides a stereoscopic image displaying method which provides a user interface appropriate for a 3D image signal, comprising: a first step of generating a user interface; a second step of scaling the generated user interface according to a mode of a 3D image signal; a third step of storing the scaled user interface together with a first position value in a first storage unit; a fourth step of copying the user interface stored in said first storage unit and stores the same together with a second position value in a second storage unit according to said mode of said 3D image signal; and a fifth step of combining each user interface, which are stored respectively in said first storage unit and in said second storage unit, according to their respective position values, and stores the same in a combined storage unit.

The present invention thereby provides a user interface which causes no distortion in a stereoscopic image display.

In addition, the present invention thereby provides a UI which causes no distortion in a stereoscopic image display without consuming additional resources by using functions that is supported in driver-level applications.

In addition, the present invention thereby improves the ease of use by providing a UI which causes no distortion in stereoscopic display to allow users to control display settings.

### BRIEF DESCRIPTION OF THE DRAWINGS

Figure 1 shows 3D modes that can be applied to various 3D image signals.
Figure 2 is a view explaining the operation that a conventional formatter that formats 3D image signals which have various modes appropriate for stereoscopic image display output.
Figure 3 shows the distortion phenomena of a conventional UI which is included in the 3D image signal of the side-by-side mode as a result of performing formatting by a formatter.
Figure 4 shows the distortion phenomena of a conventional UI which is included in the 3D image signal of the top-down mode as a result of performing formatting by a formatter.
Figure 5 is a block diagram showing an example of the composition of an apparatus for stereoscopic images display according to embodiments of the invention.
Figure 6 is a view schematically explaining a method that the apparatus for stereoscopic images display according to the invention uses to generate a UI for 3D image signals in the side-by-side mode.
Figure 7 is a view schematically explaining a method that the apparatus for stereoscopic images display according to the invention uses to generate a UI for 3D image signals in the top-down mode.
Figure 8 is a flow chart explaining the performance of the apparatus for stereoscopic images display according to the invention for the generated UI for 3D image signals in the side-by-side mode.
Figure 9 is a flow chart explaining the performance of the apparatus for stereoscopic images display according to the invention for the generated UI for 3D image signals in the top-down mode.

### DETAILED DESCRIPTION

The terms 3-D or 3D is used to describe a visual representation or the display technology for reproducing 3D images or videos which has the optical illusion of depth. For a left eye image and a right eye image, the visual cortex of an observer interprets the two images as one 3D image.

3D display technology is adopted for 3D image processing and displaying for devices which can display 3D images. Optionally, the devices which can display 3D images may have to use special viewing devices to effectively provide 3D images to the observer.

Examples of the devices which can display 3D images include Liquid Crystal Displays (LCDs) which is equipped with hardware and/or software appropriate for supporting 3D displaying technology, digital TVs, computer monitors, and so on. Examples of the special observing devices are specialized glasses, goggles, head gear, eyewear, and so on.

Specifically, 3D image displaying technology includes: anaglyph stereoscopic (typically, used with passive anaglyph glasses), polarized stereoscopic (typically, used with a passive polarized glasses), alternate-frame sequencing (typically, used with a passive shutter glasses/head gear), autostereoscopic display using a lenticular or barrier screen and so on in. Various characteristics and features which are described hereafter can be applied to such stereoscopic displaying techniques.

Some 3D images displaying techniques can use optical devices which rotate or operate alternately, such as a segmented polarizer attached to color filter wheel. In this case, synchronization techniques are required. Other 3D image displaying techniques can use a digital light processor (DLP) which based on digital micromirror devices (DMD) that use microscopic mirrors which are placed in a rectangular array, with each micromirror being rotatable.

On the other hand, new types of technical standards associated with rendering of stereoscopic images and displaying techniques (especially, 3D TV) are being developed by various companies, consortiums and organizations, with examples such as: SMPTE (Society of Motion Picture and Television Engineers), CEA (Consumer Electronics Association), 3d@home consortiums, ITU (International Telecommunications Union) and so on. In addition, other standardization groups such as DVB, BDA, ARIB, ATSC, DVD forums and IEC are involved. The MPEG (Moving Picture Experts Group) has been involved in 3D image coding of multi-view videos, stereoscopic images, two-dimensional images which have depth information, and now multi-view video codec extensions for MPEG-4 AVC (advanced video coding) are being standardized. Stereoscopic image coding and stereoscopic allocation formatting are related to color shifting (anaglyph), pixel sub-sampling (side-by-side, checkerboard, quincunx and so on), and enhanced video coding (2D+delta, 2d+metadata, 2d which have depth information).

The characteristics and features which are described in this disclosure can be applied to such standards.

Also, at least some of the characteristics and features which are described in this disclosure are related to 3D image display techniques that are explained in terms of digital images or image display and display environments for 3D TV. For example, 3D TV techniques can be applied to not only TV broadcasting, but also to Blue-Ray^{™}, console games, cable and IPTV transport, mobile telephone contents transfer, and so on, and in this case, it should be compatible with any other types of TV, set top boxes, blue-ray devices (for example, a Blue-Ray^{™} disk (BD) player), DVD players and TV contents divider.

Hereafter, the disclosure invention is described in detail with reference to the accompanying drawings. Throughout drawings, the same reference numerals may refer to the same components.

The disclosure of the present invention provides a method for preventing distortion on display of user interface by transform of 3D image signals. In particular, the disclosed invention provides a method which can display a UI which causes no distortion even if the 3D mode of the 3D image signals is in side-by-side mode or in top-down mode.

Also, the disclosed invention provides a method for providing a UI which causes no distortion on stereoscopic display without consuming much additional resources by using a scaling function that is supported for UI at the driver level.

Hereafter, the composition and operation of an apparatus for stereoscopic images display according to the invention are described in detail with reference to Figure 5. Figure 5 is a block diagram showing an example of the composition of an apparatus for stereoscopic images display according to the invention.

An apparatus for stereoscopic images display according to the invention may be comprised of a user interface generating unit 510 which generates a user interface (UI), a UI-scaling unit 520 which scales the generated UI in accordance with the mode of the 3D image signal, a first storage unit 530 which stores the scaled UI together with a first position value, a second storage unit 540 which copies the UI stored in the first storage unit 530, and stores the copied UI together with a second position value in accordance with the mode of the 3D image signal, and an integrated storage unit 550 which integrates the UIs stored in the first storage unit 530 and in the second storage unit 540 in accordance with the position value of each of the UIs, and stores the integrated UIs. Thereafter, the UI data stored in the integrated storage unit 550 is formatted to fit on the stereoscopic images display with the 3D image signal at a formatting unit (not shown).

Hereafter, the composition and operation of an apparatus for stereoscopic images display according to the invention which comprises as above are described in more detail. In this embodiment, the UI of the apparatus for stereoscopic images display uses an on screen display (OSD) method.

First, the user interface generating unit 510 generates the user interface (UI) for input from users.

The UI-scaling unit 520 adjusts the size of the generated UI in the user interface generating unit 510 by scaling the horizontal length or vertical height in accordance with the mode of the 3D image signal.

For example, in case of the mode of the 3D image signal is the side-by-side mode, the UI-scaling unit 520 can reduce the horizontal length of the generated UI to 1/2. On the other hand, in case of the mode of the 3D image signal is the top-down mode, the UI-scaling unit 520 can reduce the vertical height of the generated UI to 1/2.

The first storage unit 530 stores the scaled UI in the UI-scaling unit 520 with a first position value as an initial position value. For example, in case of the mode of the 3D image signal is the side-by-side mode, the first position value is a position coordinates to be inserted the UI on the left image. On the other hand, in case of the mode of the 3D image signal is the top-down mode, the first position value is a position coordinates to be inserted the UI on the top image.

Next, the second storage unit 540 copies the UI stored in the first storage unit 530, and stores the copied UI together with a second position value in accordance with the mode of the 3D image signal as an initial position. For example, in case of the mode of the 3D image signal is the side-by-side mode, the second storage unit 540 stores the UI which is inserted in right image, and for this the second storage unit 540 copies and stores the UI stored in the first storage unit 530. At this point, the second position which an initial position of the UI stores in the second storage unit 540 is set by adding 1/2 of screen resolution of length direction to a coordination of length direction in the first position value.

On the other hand, in case the mode of the 3D image signal is the top-down mode, the second storage unit 540 stores the UI which is inserted in bottom image, and for this the second storage unit 540 copies and stores the UI stored in the first storage unit 530. At this point, the second position which an initial position of the UI stores in the second storage unit 540 is set by adding 1/2 of screen resolution of height direction to a coordination of height direction in the first position value.

The integrated storage unit 550 integrates the UIs stored in the first storage unit 530 and in the second storage unit 540 in accordance with the position value of each of the UIs, and stores the integrated UIs. After that, the UI data stored in the integrated storage unit 550 is formatted to fit on the stereoscopic images display with the 3D image signal at a formatting unit (not shown) and is transmitted.

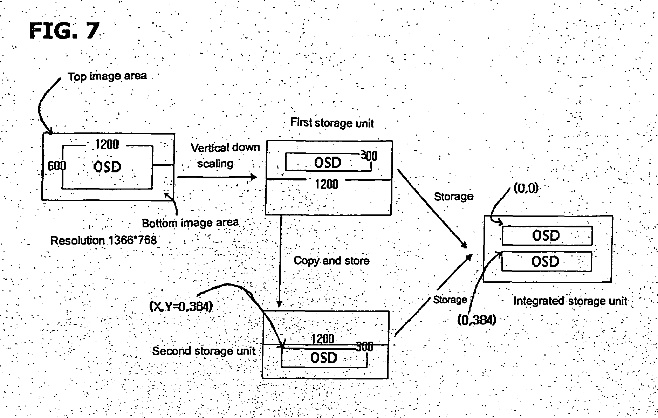

Figures 6 and 7 schematically show the operations performed by the apparatus for stereoscopic images display according to the invention. Figure 6 is a view schematically explaining a method that an apparatus for stereoscopic images display according to the invention generates UI for 3D image signal in which the side-by-side mode. On the other hand, Figure 7 is a view schematically explaining a method that an apparatus for stereoscopic images display according to the invention generates UI for 3D image signal in which the top-down mode.

In Figures 6 and 7, the resolution of the entire display image is 1366*768. In other words, the length of horizontal direction consists of 1366 pixels, and the height of vertical direction consists of 768 pixels. Also, in Figure 6, the left image is located on the left of the entire image, and the right image is located on the right of the entire image, on the other hand, in Figure 7, the top image is located on the top of the entire image, and the bottom image is located on the bottom of the entire image.

In the following, an example of an operation that the apparatus for stereoscopic images display according to the invention as above generates an UI for stereoscopic with reference to the accompanying drawings. At this point, the Configuration of the entire display image is same as in Figures 6 and 7.

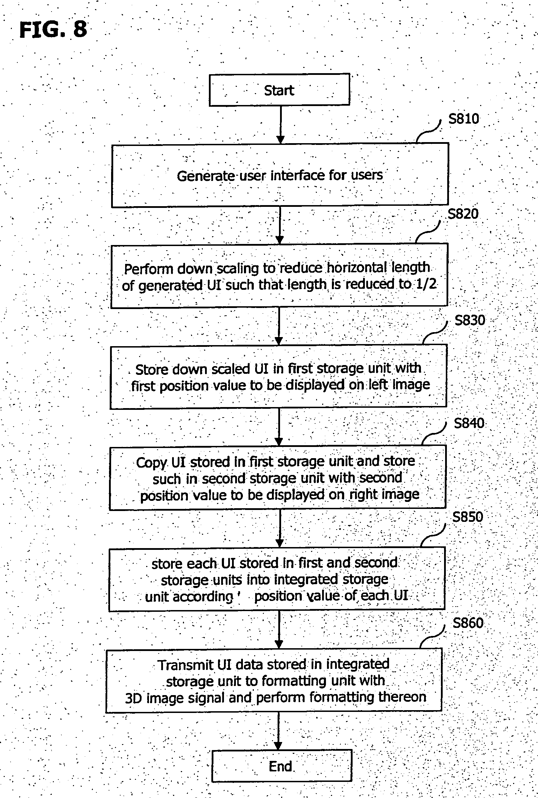

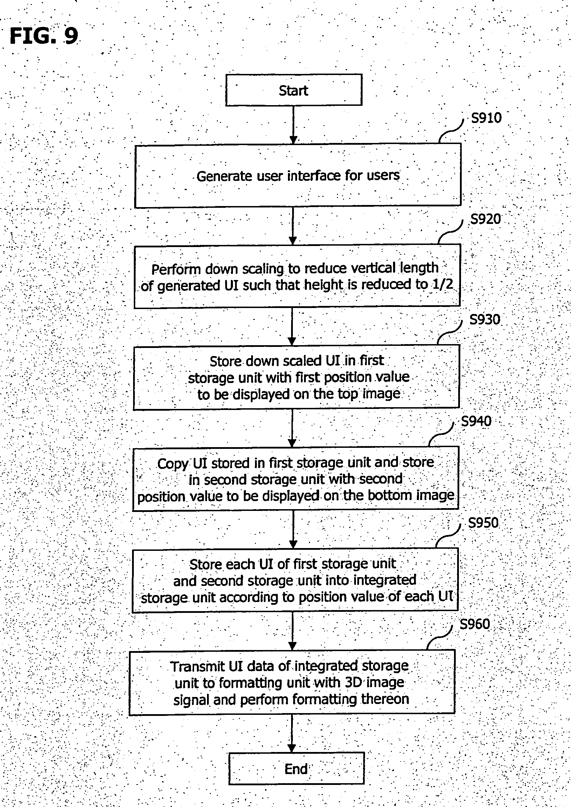

Figure 8 explains the performance that an apparatus for stereoscopic images display according to the invention generates UI when 3D image signal is in side-by-side mode, and on the other hand, Figure 9 is explaining performance that an apparatus for stereoscopic images display according to the invention generates UI when 3D image signal is in top-down mode.

First, a method that an apparatus for stereoscopic images display according to the invention generates UI when 3D image signal is in side-by-side mode will be explained with reference to Figure 8. Figure 8 is a flow chart explaining performance that an apparatus for stereoscopic images display according to the invention generates UI when 3D image signal is in side-by-side mode

First, the user interface generating unit 510 generates the user interface for users (S810). The UI generated first is, as shown in Figure 6, located on throughout two areas of the left image and the right image.

The UI-scaling unit 520 performs down scaling which reduces the horizontal length of the generated UI, so that the length reduced to 1/2 (S820).

Next, the scaled UI which scaled by the UI-scaling unit 520 is stored in the first storage unit 530 with the first position value which will be displayed on the left image (S830). In this embodiment, for displaying the position value, relative to the screen the horizontal direction is called the x-direction and the vertical direction is called the y-direction. Here, the first position value which an initial value of down scaled UI is set to x=0 and y=0 (in other words, (x, y) = (0, 0)).

After that, the UI which is stored in the first storage unit 530 is copied and stored in the second storage unit 540 with the second position value which will be displayed on the right image (S840). At this point, a method of setting the second position value is adding 1/2 of the horizontal direction resolution value of entire screen to the x value which is the coordinate of the horizontal direction of the first position value.

In other words, the y value which the coordinate of the vertical direction is equally set to y=0. And, the x value which is the coordinate of the horizontal direction, has an added value of 683 (=1366/2), which 1/2 of 1366 which is the horizontal direction resolution of the entire screen. So, the second position value (x, y) which is the position value of the copied and re-stored UI in a second buffer is set to (683, 0) (in other words, (x, y) = (683,0)).

Next, each UI stored in the first storage unit 530 and in the second storage unit 540 are stored in the integrated storage unit 550 in accordance with the position value of each of the UIs (S850). The UI data stored in the integrated storage unit 550 is transmitted to a formatting unit (not shown) with the 3D image signal and is formatted to fit on the stereoscopic images after that (S860).

In this way, the disclosure invention can display properly the UI without distortion even when the formatting operation for stereoscopy images display outputting of 3D image signal, by generating and inserting the UI for each of the left image and the right image of the 3D image signal in the side-by-side mode.

Below, a method that an apparatus for stereoscopic images display according to the invention generates UI when 3d image signal is in top-down mode will be explained with reference to Figure 9. Figure 9 is a flow chart explaining performance that an apparatus for stereoscopic images display according to the invention generates UI when 3D image signal is in top-down mode.

First, the user interface generating unit 510 generates the user interface for users (S910). The UI generated first is, as shown in figure 7, located on throughout two areas of the top image and the bottom image.

The UI-scaling unit 520 performs down scaling which reduces the vertical length of the generated UI, so that the height is reduced to 1/2 (S920).

Next, the scaled UI which was scaled by the UI-scaling unit 520 is stored in the first storage unit 530 with the first position value which will be displayed on the top image (S930). Here, the first position value which an initial value of the down scaled UI is set to x=0 and y=0 (in other words, (x, y) = (0, 0)).

After that, the UI which is stored in the first storage unit 530 is copied and stored in the second storage unit 540 with the second position value which will be displayed on the bottom image (S940). At this point, a method of setting the second position value requires adding of 1/2 of the vertical direction resolution value of entire screen to the y value which is the coordinate of the vertical direction of the first position value.

In other words, the x value which is the coordinate of the horizontal direction is equally set to x=0. And, the y value which is the coordinate of the vertical direction, has a value of 384 (= 768/2) added thereto, which is 1/2 of 768 which is the vertical direction resolution of the entire screen. So, the second position value (x, y) which is position value of copied and re-stored UI in a second buffer is set to (0, 384) (in other words, (x, y) =(0,384)).

Next, each of the UIs stored in the first storage unit 530 and in the second storage unit 540 are stored in the integrated storage unit 550 in accordance with the position value of each of the UIs (S950). The UI data stored in the integrated storage unit 550 is transmitted to a formatting unit (not shown) with the 3D image signal and is formatted to fit on the stereoscopic images after that (S960).

In this way, the disclosed invention can properly display the UI without distortion even when the formatting operation for stereoscopy images display outputting of 3D image signal, by generating and inserting the UI for each of the top image and the bottom image of the 3D image signal in the top-down mode.

As explained in above, according to an apparatus and method for stereoscopic images display according to the invention, the user interface such as on screen display (OSD) can displayed properly without distortion for stereoscopic images display, so that the ease of use for users of an apparatus for stereoscopic images display can be improved. Also, the disclosed invention can provide a UI which causes no distortion on the stereoscopic display without consuming additional resources by using function that is supported in the driver level.

This disclosure describes various embodiments to explain the ingenious characteristics of the present invention associated with various aspects. But, at least one of the specific features of at least one of the specific embodiments can be also applied for at least one other embodiment. Each embodiment and some components or steps explained in figures associated with them can be modified, and also can be deleted, moved or included additional components and/or steps.

The various features and characteristics explained herein can be performed in the form of software, hardware, firmware, middleware or combinations of these. For example, computer programs (executed by computer, processor, and controller and so on) which is stored in computer-executable media for Implementation stereoscopic images display and for an apparatus for stereoscopic images display, can include at least one of the program code sections which perform various tasks. Similarly, software tools or programs (executed by computer, processor, and controller and so on) which is stored in computer-executable media for implementation of the stereoscopic images display and for an apparatus for stereoscopic images display, can a part of the program code which perform various tasks.

### INDUSTRIAL APPLICABILITY

The disclosed invention is available for all devices which displays stereoscopic images such as various types of equipment to form stereoscopic images, in other words, digital TV, LCD display devices, portable media players (PMP), mobile phones and computer monitors.

As the various concepts and features described herein may be embodied in several forms without departing from the characteristics thereof, it should also be understood that the above-described embodiments are not limited by any of the details of the foregoing description, unless otherwise specified, but rather should be construed broadly within its scope as defined in the appended claims. Therefore, all changes and modifications that fall within such scope or equivalents thereof are therefore intended to be embraced by the appended claims.

## Claims

1. A stereoscopic image reproduction apparatus that provides a user interface appropriate for 3D image signals, the apparatus comprising:
a user interface generating unit that generates a user interface;
a user interface scaling unit that scales the generated user interface according to a mode of a 3D image signal;
a first storage unit that stores the scaled user interface together with a first position value;
a second storage unit that copies the user interface stored in said first storage unit and stores the same together with a second position value according to said mode of said 3D image signal; and
a combined storage unit that combines each user interface, which are stored respectively in said first storage unit and in said second storage unit, according to their respective position values, and stores the same.

2. The apparatus of claim 1, wherein if said 3D image signal is in side-by-side mode, said user interface scaling unit performs down scaling that applies reduction in a horizontal direction on the generated user interface.

3. The apparatus of claim 1, wherein if said 3D image signal is in top-down mode, said user interface scaling unit performs down scaling that applies reduction in a vertical direction on the generated user interface.

4. The apparatus of claim 1, wherein said first storage unit and said second storage unit are integrated together.

5. The apparatus of claim 1, wherein if said 3D image signal is in side-by-side mode, a user interface for left side images is stored in said first storage unit, and a user interface for right side images is stored in said second storage unit, and said first position value and said second position value is respectively an initial position value for each user interface in its corresponding image.

6. The apparatus of claim 5, wherein a horizontal direction coordinate value of the second position value is determined based on a horizontal direction coordinate value of the first position value and a horizontal direction resolution value of the entire screen.

7. The apparatus of claim 1, wherein if said 3D image signal is in top-down mode, a user interface for upper images is stored in said first storage unit, and a user interface for lower images is stored in said second storage unit, and said first position value and said second position value is respectively an initial position value for each user interface in its corresponding image.

8. The apparatus of claim 7, wherein a vertical direction coordinate value of the second position value is determined based on a vertical direction coordinate value of the first position value and a vertical direction resolution value of the entire screen.

9. A stereoscopic image reproduction method that provides a user interface appropriate for 3D image signals, the method comprising:
a first step of generating a user interface;
a second step of scaling the generated user interface according to a mode of a 3D image signal;
a third step of storing the scaled user interface together with a first position value in a first storage unit;
a fourth step of copying the user interface stored in said first storage unit and stores the same together with a second position value in a second storage unit according to said mode of said 3D image signal; and
a fifth step of combining each user interface, which are stored respectively in said first storage unit and in said second storage unit, according to their respective position values, and stores the same in a combined storage unit.

10. The method of claim 9, wherein in said second step, if said 3D image signal is in side-by-side mode, performing down scaling that applies reduction in a horizontal direction on the generated user interface.

11. The method of claim 9, wherein in said second step, if said 3D image signal is in top-down mode, performing down scaling that applies reduction in a vertical direction on the generated user interface.

12. The method of claim 9, wherein said first storage unit and said second storage unit are integrated together.

13. The method of claim 9, wherein if said 3D image signal is in side-by-side mode, a user interface for left side images is stored in said first storage unit, and a user interface for right side images is stored in said second storage unit, and said first position value and said second position value is respectively an initial position value for each user interface in its corresponding image.

14. The method of claim 13, wherein a horizontal direction coordinate value of the second position value is determined based on a horizontal direction coordinate value of the first position value and a horizontal direction resolution value of the entire screen.

15. The method of claim 9, wherein if said 3D image signal is in top-down mode, a user interface for upper images is stored in said first storage unit, and a user interface for lower images is stored in said second storage unit, and said first position value and said second position value is respectively an initial position value for each user interface in its corresponding image.

16. The method of claim 15, wherein a vertical direction coordinate value of the second position value is determined based on a vertical direction coordinate value of the first position value and a vertical direction resolution value of the entire screen.
